Europäisches Patentamt

European Patent Office

Office européen des brevets

(11) Publication number: **0 316 051**
**A2**

# EUROPEAN PATENT APPLICATION

(21) Application number: 88202996.0

(22) Date of filing: 03.02.84

(51) Int. Cl.⁴: **G11B 7/24**

(30) Priority: 09.02.83 NL 8300478

(43) Date of publication of application:
**17.05.89 Bulletin 89/20**

(60) Publication number of the earlier application in accordance with Art.76 EPC: **0 118 146**

(84) Designated Contracting States:
**DE FR GB IT**

(71) Applicant: **N.V. Philips' Gloeilampenfabrieken**
**Groenewoudseweg 1**
**NL-5621 BA Eindhoven(NL)**

(72) Inventor: **Janssen, Peter Johannes Michiel**
**c/o INT. OCTROOIBUREAU B.V. Prof.**
**Holstlaan 6**
**NL-5656 AA Eindhoven(NL)**

(74) Representative: **Van Weele, Paul Johannes**
**Frits et al**
**INTERNATIONAAL OCTROOIBUREAU B.V.**
**Prof. Holstlaan 6**
**NL-5656 AA Eindhoven(NL)**

(54) **Optical readable storage disc.**

(57) An optically readable storage disc comprises a transparent substrate 1 on which a recording layer 2 is deposited which can be modified locally by means of a radiation beam, the recording layer is covered by a cover disc 3 which is secured to the substrate in a gas-tight manner at some distance from the part of the recording layer which is intended for recording, so that a sealed space 4 is enclosed between the substrate 1 and the cover disc 3. The cover disc 3 will be deformed to the greatest extent under the influence of differences between the gas pressure in the sealed space 4 and the barometric pressure because its resistance to deformation is made substantially smaller that that of the substrate so that deformation of the substrate 1 is substantially precluded.

## Optical readable storage disc.

The invention relates to an optically readable storage disc comprising a transparent substrate, a recording layer on the substrate which layer can be modified locally by means of a radiation beam, and a cover disc which is secured to the substrate in a substantially gas-tight manner at a distance from at least that part of the recording layer which is intended for recording, so that a sealed space is enclosed between the substrate and the cover disc.

Such a storage disc is known, for example from United States Patent Specification 4,074,282 (PHA 20742), in which the storage disc comprises a plurality of first discs which are spaced from each other by concentric annular spacers glued between them near a central aperture and near the circumference of the storage disc. In practice a storage disc which comprises two glass substrates between which two concentric annular spacers are glued has been used most frequently until now. Each of the glass substrates is provided with a recording layer on the side which faces the sealed space. Thus, a double-sided disc is obtained and the one substrate serves as a cover disc for the other substrate.

The gas-tight sealing of the enclosed space of this known storage disc is necessary for two reasons. First, the recording layer is formed by vacuum-deposition of a tellurium alloy on the glass substrate. During recording a laser beam forms pits in the tellurium layer by local melting. Environmentally less desirable gaseous by-products are then released. The sealed space then functions as a space in which these gaseous by-products are trapped. Second, it is desirable to protect the tellurium layer against atmospheric influences, in particular against moisture in combination with oxygen, because oxydization of the tellurium layer would occur, which would impair the readability of the recorded information. The presence of a gas-tight sealed space is therefore essential. However, this sealed space is also a source of problems. In particular, the deformation of the storage disc under the influence of changes in the barometric pressure. Said known storage discs have a diameter of approximately 30 cm and although they comprise glass substrates of some millimetres thickness they may be deformed to an undesired extend. Such deformations may impair the recording and reading process and they may also load the critical layers of glue between the substrates and the annular spacers. It is an object of the invention to provide an optically readable storage disc of the type mentioned in the opening paragraph which has improved properties in this respect and which in principle is suitable for use up to altitudes of a few thousands of metres above sea level. The invention is characterized in that, in comparison with the substrate, the cover disc has a substantially lower resistance to deformations caused by differences between the gas pressure in the sealed space and the barometric pressure.

The storage disc in accordance with the invention employs a cover disc which differs from the substrate so that generally the storage disc can be used on one side only. The lower resistance of the cover disc to deformations caused by differences between the gas pressure in the sealed space and the barometric pressure ensures that the substrate deforms to a substantially smaller extent than the known storage disc. For many uses the one-side storage capability of the disc is no problem, whilst it is of importance that the substrate remains flat under all conditions of barometric pressure.

Preferably, the cover disc is made of thin metal sheet. Such a cover disc is gas-tight, easy to manufacture and depending on the thickness, which in principle can be very small, it is also sufficiently flexible in relation to the deformability of the substrate.

One embodiment is characterized in that the cover disc is formed as a shallow tray comprising first portions for connection to the substrate, which first portions are disposed in a first plane, and second portions, for covering the sealed space, which second portions are disposed substantially in a second plane at some distance from and parallel to the first plane.

In accordance with another advantageous characteristic feature the cover disc comprises third portions which adjoin the first portions and which comprise the circumference of the substrate. It is envisaged that the substrate will generally be glued to the cover disc. Some glues which are suitable for the purpose, such as epoxy resins, require heating of the product to a temperature of 80 to 90 °C for correct and fast curing. The last-mentioned embodiment has the advantage that the cover disc and the substrate are centred relative to each other before the layer of glue has cured, which is of importance for efficient production. A second advantage is that the layer of glue may have a greater radial width than when the third portion does not comprise the circumference of the substrate. The gas-tight sealing of the sealed space improves as the path-length through the layer of glue from the atmospheric air to the sealed space is increased. In this respect another embodiment is of interest, which is characterized in that the said third portions are folded around the circumference of the substrate. This leads to a further increase of said path-length. The principal advantage of this embodiment, however, is that before the layer of glue is subjected to thermal treatment the substrate and cover disc already form a structural unit and can therefore be handled without problems. This embodiment has additional advantages for storage discs in which the cover disc is not glued to the substrate and in which a permanently elastic sealing layer is present between the cover disc and the substrate. The folded-over edge loads the elastic sealing layer permanently in compression, which is of importance for the quality of the gas-tight seal. Such storage discs may have a shorter life expectancy than storage discs in which the cover disc is glued to the substrate. However, for some uses this may not be an objection. Rapid and cheap manufacture and consequently low price may be of greater importance to the consumer in certain applications than the life expectancy of the disc.

The problems associated with the gas-tight connection of the cover disc to the substrate can be mitigated by the use of an embodiment of the invention which is characterized in that the substrate comprises a flat disc without a central aperture and the cover disc is connected to the substrate only near the circumference. In comparison with the afore-mentioned known optical storage discs such an embodiment of the invention has the advantage that only one connection is required between the substrate and the cover disc. Since the substrate and the cover disc are not interconnected near the centre, this has the additional advantage that both the substrate and the cover disc have a lower resistance to flexure under the influence of differences between the pressure in the sealed space and the barometric pressure. However, the ratio of the two rigidities increases even further, so that the situation as regards the deformation of the substrate remains more favourable. However, since the cover disc now has a greater span and is even more flexible, it is not unlikely that under certain conditions, for example due to mishandling or in the case of an extremely high ambient pressure, the cover disc would be pressed against parts of the recording layer which are intended for recording, so that these parts could be damaged, thereby rendering the storage disc unserviceable.

An embodiment of the invention which provides an improvement in this respect is characterized in that the shallow tray comprises central fourth portions disposed in a plane between the first two planes and above a part of the substrate which is not intended for recording.

Another embodiment has the advantage that very thin and flexible material may be used without the risk that the cover disc can be pressed against the recording layer in the part between the third and fourth portions, i.e. in the part facing the part of the recording layer intended for recording, and is characterized in that the cover disc is formed with radial reinforcements. In the case of a metal cover disc, the reinforcements may be obtained by local deformation of a flat cover disc.

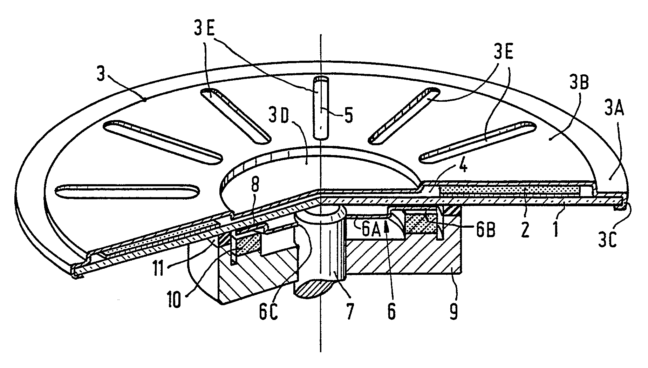

The invention will now be described in more detail, by way of example, with reference to the drawing which is a perspective view of an optically readable storage disc in accordance with the invention, a part of the storage disc and some parts belonging to an apparatus for driving the storage disc being cut away.

The storage disc comprises a transparent glass or plastics substrate 1. A reflecting recording layer 2 which can be modified locally by means of a radiation beam, is deposited on the substrate. In the present embodiment this recording layer is present only on the substrate area which is actually intended for recording. However, it is possible to deposit the recording layer over a larger part of the substrate, if desired over the entire substrate area. Information is recorded and read through the transparent substrate by means of a laser beam, not shown. A cover disc 3 is fixed to the substrate in a substantially gas-tight manner at some distance from the recording layer 2, so that a sealed space 4 is enclosed between the substrate and the cover disc. The cover disc is substantially thinner than the substrate and has a substantially lower resistance to deformations as may be caused by differences between the gas pressure in the sealed space 4 and the barometric pressure.

The cover disc is made of thin metal sheet, for example aluminium sheet, which is formed into a shallow tray comprising first portions 3A in the form of an annular flange for the connection to the substrate, which flange is disposed in a first plane. Second portions 3B, which constitute the bottom of the shallow tray and which cover the sealed space 4 are disposed in a second plane parallel to the first plane. Adjacent the flange 3A third portions are present in the form of a folded-over rim 3C which comprises the circumference of the substrate. These third portions are folded around the circumference of the substrate. The substrate 1 comprises an entirely flat disc and is not provided with the usual central aperture for centring and placing the disc on a drive apparatus. The cover disc is therefore connected to the substrate only near the circumference. The cover disc also comprises fourth portions 3D in the form of a round embossment whose bottom is disposed in a plane between the afore-mentioned two planes and above a part of the substrate which is not used for recording. This part is disposed at some distance from the substrate but is situated closer to said substrate than the portion 3B. If the cover disc is depressed this portion, inter alia because it is the most central portion, will first come into contact with the substrate but in an area where this has no undesired consequences. In this respect it is important, especially when a very thin metal sheet is used, that the cover disc is provided with radial reinforcements 3E formed by local deformation. These reinforcements ensure that the portion 3B has the required rigidity.

The storage disc can be rotated about a central axis of rotation 5. On the side facing the recording layer 2 the substrate carries an axially projecting central centring member 6. This member is adapted to cooperate with centring means in the form of a spindle 7 of an apparatus, not shown, for inscribing and/or reading optically readable storage discs. A suitable apparatus, apart from the centring means which are of a slightly different construction and which are intended for cooperation with discs having a central aperture, is described in the Applicants previous Patent Application 8300133 (PHN 10.548) which has not been published in due time (herewith incorporated by reference). The entire centring member 6 is made of steel sheet and is connected to the substrate by a layer of glue 8. It comprises a flat flanged rim 6B which is connected to the substrate by the layer of glue 8. The bottom 6A of the centring member 6 is formed with a central centring aperture 6C through which the spindle 7 extends with a slight clearance. This spindle may be the motor spindle of a drive motor, allowing a very simple yet sufficiently accurate centring of the storage disc on the drive apparatus.

The spindle 7 carries a turntable 9 which supports the substrate 1. The turntable carries an annular permanent magnet 10 which draws the sheet-steel centring means 6 axially onto the turntable 9. Furthermore, the turntable comprises a ring 11 of a suitable elastic material which is subject to a slight elastic deformation as a result of the force of attraction of the permanent magnet 10. In the present embodiment the ring 11 cooperates directly with the substrate 1. Alternatively, the flange 6B of the centring means 6 may be given a greater diameter, so that the ring 11 does not cooperate directly with the substrate 1 but with the flange 6B. The free end of the motor spindle 7 bears against the underside of the substrate and thus constitutes a stop which defines the axial position of the information disc on the turntable 9.

The invention is not limited to the embodiment shown in the drawing and many different embodiments are possible within the scope of the invention as defined in the Claims. The substrate 1 may have a central aperture, so that the cover disc 3 and the substrate are also inter-connected nearer the centre of the substrate. The cover disc may be of a material other than metal, for example, a suitable plastics. Generally, a plastics material is not absolutely moisture-proof, but this need not be an objection for discs which only need to have a limited life-time.

The provision of a substrate without a center aperture has additional advantages as disclosed and explained in the Applicants co-pending patent application (PHN 10.576) (herewith incorporated by reference).

## Claims

1. An optically readable disc comprising a round transparent substrate (1) which is to be driven about a central axis of rotation (5) and which is provided with an information layer, characterized in that the substrate carries on the side opposite to the side provided with the information layer a separate axially projecting central centring member (6) affixed to it for co-operation with centring means (7) of an apparatus for writing and/or reading information on optically readable discs.
(EP O.117.576 A1 (PHN 10.576) - complete text and drawing EP O.118.146 A1 (PHN 10.577) - complete text and drawing. Note also page 7, line 33.)

2. An optically readable disc as claimed in claim 1, characterized in that
- the centring member is provided with centrally located central means which are axially spaced from the substrate,
- the central means are connected to the substrate by peripheral axial interconnecting means,
- an air space is present between the central means and the substrate and
- the central means is provided with a circular central aperture to allow the penetration of a centring protrusion of the centring means of the apparatus into the air space.
(EP O.117.576 A1 (PHN 10.576) and O.118.146 A1 (PHN 10.577) - complete text and drawing.)

3. An optically readable disc as claimed in claim 2, characterized in that the centring protrusion is shorter than the interconnecting means.
(EP O.118.146 A1 (PHN 10.577): page 7, lines 26-29.)

4. An optically readable disc as claimed in claim 2, characterized in that the central means comprises a metal part and in that the central aperture is machined into the metal part to cooperate with a motor spindle of a drive motor with slight clearance.
(EP O.117.576 A1 (PHN 10.576) - page 5, lines 30-36; page 7 lines 37-38 to page 8, lines 1-4, EP O.118.146 A1 (PHN 10.577) - page 7, lines 11-13.)

5. An optically readable disc as claimed in claim 4, characterized in that the spindle is provided with a sloping pre-centring portion at its free end and in that the transitional portion between the inner wall of the central aperture and the outside surface of the centring member is substantially smaller than the said pre-centring portion.
(EP O.117.576 A1 (PHN 10.576) and EP O.118.146 A1 (PHN 10.577) -drawing.)

6. An optically readable disc as claimed in claim 5, characterized in that the axial length of the part of the central aperture cooperating with the spindle is small in comparison to the diameter of the spindle.
(EP O.117.576 A1 (PHN 10.576) and EP O.118.146 A1 (PHN 10.577) -drawing.)

7. An optically readable disc as claimed in claim 1, characterized in that the centring member is made at least partly of a ferromagnetic material.
(EP O.117.576 A1 (PHN 10.576) - page 4, lines 29-30 and page 9 last paragraph.)

8. An optically readable disc as claimed in claim 7, characterized in that the centring member (6) is made entirely of a ferromagnetic material and is connected to the substrate by a layer of adhesive (8).
(EP O.117.576 A1 (PHN 10.576) - page 4, lines 33-34,
EP O.118.146 A1 (PHN 10.577) - page 7, lines 6-9.)

9. An optically readable disc as claimed in claims 2 and 8, characterized in that the centring member (6) comprises a central means (6A) made of a sheet material and the peripheral axial interconnecting means (6C) comprise a circular wall joined to the central means and to a flat flange-shaped rim (6B), and the flange-shaped rim is connected to the substrate by a layer of adhesive.
(EP O.117.576 A1 (PHN 10.576) - page 5, lines 19-23.)

10. An optically readible disc as claimed in any of the preceding claims, characterized in that the centring means of the apparatus supports the disc at a location radially spaced from the centring member and directly contacts the substrate.
(EP O.118.146 A1 (PHN 10.577) - page 7, lines 22-23 and drawing.)

11. A method of manufacture of an optically readable disc according to claim 1, comprising the steps of accurate alignment of the centring member relative to an optically detectable characteristic such as tracks on the substrate or the outer circumference of the substrate by using optical means and the subsequent affixing of the centring member to the substrate.
(EP O.117.576 A1 (PHN 10.576) - page 5, lines 12-16 and page 6, lines 1-2.)

12. A method of manufacturing an optically readable disc as claimed in claim 7, comprising the steps of affixing the centring member to the substrate in an earlier stage of manufacture and at a later stage to use electrically controlled electromagnetic clutches which release or attract the centring member.
(EP O.117.576 A1 (PHN 10.576) - page 4, line 36 to page 5, line 6.)

13. A method of manufacture as claimed in claim 11 wherein a plurality of rotating spindles is used in various stages of manufacture for spinning the substrates and wherein automatic mechanical means are used to transfer the substrates automatically from one spindle to another.
(EP O.117.576 A1 (PHN 10.576) - page 3, lines 2-18 and page 5, lines 6-11.)